# EUROPÄISCHE PATENTSCHRIFT

(11) **EP 1 602 834 B1**
(45) Veröffentlichungstag und Bekanntmachung des Hinweises auf die Patenterteilung: **21.03.2007**
(21) Anmeldenummer: 04006797.7
(22) Anmeldetag: 22.03.2004
(51) Int. Cl.: F15B 15/20, F16L 27/093, F15B 15/14

(54) **Anschlussvorrichtung für Fluidleitungen**
Connector for fluid conduits
Raccord pour conduits de fluide

(43) Veröffentlichungstag der Anmeldung: 07.12.2005
(73) Patentinhaber: Festo AG & Co., 73734 Esslingen (DE)
(72) Erfinder: Quendt, Volker, 72669 Unterensingen (DE); Kauer, Evelyn, 73733 Esslingen (DE); Danner, Tobias, 73732 Esslingen (DE)
(74) Vertreter: Abel, Martin

(56) Entgegenhaltungen:
- EP-A- 0 434 991
- DE-A1- 3 338 418
- DE-A1- 3 420 646
- DE-A1- 10 010 602
- DE-U1- 29 717 927
- US-B1- 6 296 015
- PATENT ABSTRACTS OF JAPAN Bd. 2000, Nr. 08, 6. Oktober 2000 (2000-10-06) & JP 2000 140727 A (ISHIKAME KOGYO:KK), 23. Mai 2000 (2000-05-23)

## Beschreibung

Die Erfindung betrifft eine Anschlussvorrichtung zum Anschließen mindestens einer Fluidleitung an eine fluidtechnische Komponente, beispielsweise einen fluidbetätigten Arbeitszylinder, mit einem sich in Richtung einer Befestigungsachse erstreckenden, zur Fixierung an der fluidtechnischen Komponente und gleichzeitig zur Fluidführung vorgesehenen Befestigungsteil und mit einem in Richtung einer zu der Befestigungsachse rechtwinkeligen Hauptachse von dem Befestigungsteil wegragenden Funktionsteil, an dem mindestens eine zum Anschließen einer Fluidleitung geeignete Anschlussöffnung vorgesehen ist, und das mit mindestens einer mit dem im Funktionsteil strömenden Fluid zusammenwirkenden Funktionseinheit ausgestattet ist, bei der es sich um eine Drosseleinrichtung mit einer einstellbaren Drosselschraube handelt, wobei die Drosselschraube in dem Funktionsteil so ausgerichtet ist, dass ihre Schraubenachse rechtwinkelig zur Befestigungsachse des Befestigungsteils verläuft.

Aus der DE 3338418 A1 geht ein Magnetventil hervor, das über ein gehäuseartiges Befestigungsteil verfügt, welches mit einem Gewindeschaft in eine dafür vorgesehene Bohrung eines Arbeitszylinders einschraubbar ist. Auf das Befestigungsteil ist ein verschwenkbares Funktionsteil aufgesetzt, das rechtwinkelig zu der als Befestigungsachse bezeichenbaren Längsachse des Befestigungsteils von diesem wegragt und an dem eine Anschlussöffnung vorgesehen ist, die das Anschließen einer Fluidleitung ermöglicht. In das Funktionsteil ist eine als Drosseleinrichtung ausgebildete Funktionseinheit integriert, die über eine zur variablen Einstellung der Drosselungsintensität geeignete Drosselschraube verfügt, deren Schraubenachse parallel zur Befestigungsachse des Befestigungsteils verläuft.

Eine vergleichbare Ausgestaltung einer Anschlussvorrichtung geht aus der DE 27917927 U1 hervor. Auch dort sitzt in einem rechtwinkelig von einem Befestigungsteil abstehenden Funktionsteil eine parallel zur Befestigungsachse des Befestigungsteils ausgerichtete Drosselschraube.

Den vorstehend erwähnten Bauformen ist gemeinsam eine relativ große Bauhöhe, die im an eine fluidtechnische Komponente angebauten Zustand voluminöse Abmessungen zur Folge hat.

Aus der US-B1 6296015 geht ein die eingangs zitierten Merkmale aufweisender Geschwindigkeitsregler hervor, der eine in einem Funktionsteil angeordnete Drosselschraube aufweist, wobei die Schraubenachse der Drehschraube rechtwinkelig zur Befestigungsachse eines das Funktionsteil haltenden Befestigungsteils und zugleich parallel zur Längsachse des Funktionsteils verläuft.

Es ist die Aufgabe der vorliegenden Erfindung, eine Anschlussvorrichtung zu schaffen, die bei kompakten Abmessungen eine gute Bedienerfreundlichkeit aufweist.

Zur Lösung dieser Aufgabe ist vorgesehen, dass die Schraubenachse mit Abstand zur Befestigungsachse quer zur Hauptachse des Funktionsteils verläuft.

Auf diese Weise lässt sich eine flache Bauweise des Funktionsteils und mithin der gesamten Anschlussvorrichtung realisieren. Selbst wenn mehrere fluidtechnische Komponenten so nebeneinanderliegend angeordnet sind, dass die die Anschlussvorrichtungen aufweisenden Längsseiten einander zugewandt sind, können die fluidtechnischen Komponenten mit sehr geringem Abstand zueinander angeordnet werden. Eventuell erforderliche Einstellvorgänge an der Drosselschraube können hierbei bequem von der Seite des Funktionsteils her vorgenommen werden.

Vorteilhafte Weiterbildungen der Erfindung gehen aus den Unteransprüchen hervor.

Als besonders zweckmäßig hat es sich erwiesen, die Drosselschraube so auszurichten, dass die Schraubenachse mit Abstand zur Befestigungsachse quer und zugleich rechtwinkelig zur Hauptachse des Funktionsteils verläuft.

Die zum Anschließen einer Fluidleitung geeignete mindestens eine Anschlussöffnung ist an dem Funktionsteil insbesondere so angeordnet, dass sie rechtwinkelig zu der Befestigungsachse orientiert ist, wobei sich eine Orientierung in Richtung der Hauptachse, also in Richtung der Längsachse des Funktionsteils, empfiehlt.

Es wäre prinzipiell eine Bauform möglich, bei der das Befestigungsteil fest und insbesondere auch einstückig mit dem Funktionsteil verbunden ist. Als besonders zweckmäßig hat sich jedoch eine Bauform erwiesen, bei der das Befestigungsteil als Befestigungsschraube ausgeführt ist, die das Funktionsteil durchsetzt, wobei bei Bedarf die Möglichkeit geschaffen werden kann, durch Schwenken eine winkelmäßige Positionierung des Funktionsteils relativ zur Befestigungsschraube vorzunehmen.

Die Befestigungsschraube könnte beispielsweise als Hohlschraube gestaltet sein. Höhere Durchflusswerte verspricht jedoch eine Bauform, bei der die Befestigungsschraube zur Fluidführung an ihrem Schaft umfangsseitig mindestens eine und vorzugsweise mehrere, über den Umfang verteilte, längsverlaufende rinnenartige Strömungsvertiefungen aufweist. Es können insbesondere zwei einander diametral gegenüberliegend platzierte Strömungsvertiefungen vorgesehen sein.

Bei Bedarf können in dem Funktionsteil noch weitere Funktionseinheiten untergebracht sein. Als besonders zweckmäßig in Verbindung mit einer Drosseleinrichtung empfiehlt sich ein Rückschlagventil.

Besonders kompakte Höhenabmessungen, verbunden mit einem ausreichend großen Einbauvolumen für eine oder mehrere Funktionseinheiten, verspricht ein Funktionsteil, welches Flachestalt aufweist und dabei quer zu seiner Hauptachse über einen länglichen Querschnitt verfügt, wobei die Querschnitts-Längsachse rechtwinkelig zu der Befestigungsachse des Befestigungsteils ausgerichtet ist.

Das Funktionsteil verfügt vorzugsweise über ein mehrteiliges Gehäuse, mit einem das Befestigungsteil tragenden Grundkörper und einem stirnseitig, an der dem Befestigungsteil entgegengesetzten Seite, in den Grundkörper eingesetzten Deckel, wobei der Deckel mindestens eine Anschlussöffnung für eine Fluidleitung aufweist. Dieser Deckel kann an seiner Innenseite mindestens eine Komponente einer Funktionseinheit tragen, die im installierten Zustand des Deckels vom Grundkörper umschlossen ist. Beispielsweise kann der Deckel mit einer Rückschlaglippe eines Rückschlagventils bestückt sein.

Nachfolgend wird die Erfindung anhand der beiliegenden Zeichnung näher erläutert. In dieser zeigen:
- Fig. 1: den Endabschnitt eines fluidbetätigten Arbeitszylinders, der mit einer bevorzugten Ausführungsform der erfindungsgemäßen Anschlussvorrichtung bestückt ist, wobei letztere in einer Explosionsdarstellung gezeigt ist,
- Fig. 2: die Anordnung aus Fig. 1 in einer Seitenansicht,
- Fig. 3: die bei der Anordnung gemäß Fig. 1 und 2 eingesetzte Anschlussvorrichtung bei teilweise aufgeschnittenem Gehäuse der Funktionseinheit und in einer Explosionsdarstellung,
- Fig. 4: die Anschlussvorrichtung aus Fig. 3 im Längsschnitt gemäß Schnittlinie IV-IV von unten gesehen,
- Fig. 5: eine Stirnansicht der Anschlussvorrichtung aus Fig. 3 mit Blickrichtung gemäß Pfeil V, die hier mit der Richtung der Hauptachse zusammenfällt,
- Fig. 6: eine Seitenansicht der Anschlussvorrichtung aus Fig. 3 mit Blickrichtung gemäß Pfeil VI, die hier mit der Richtung der Schraubachse zusammenfällt, und
- Fig. 7: eine Unteransicht der Anschlussvorrichtung aus Fig. 3 mit Blickrichtung gemäß Pfeil VII.

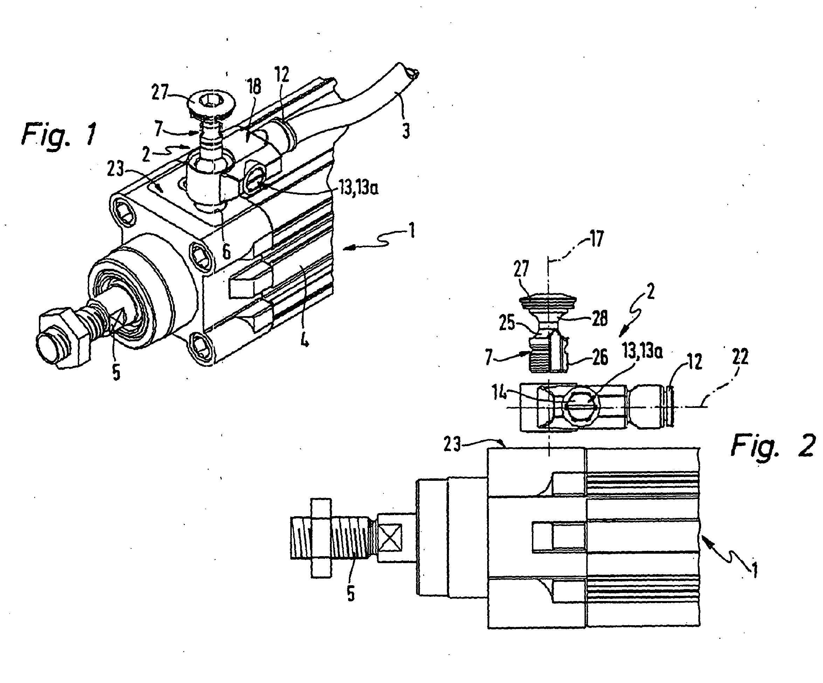

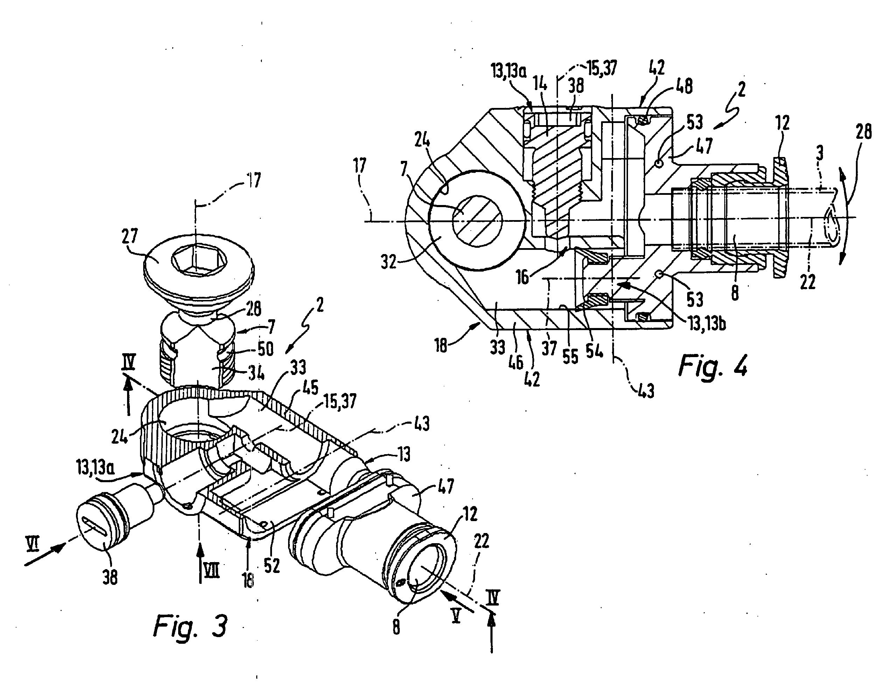

Die Fig. 1 und 2 zeigen den vorderen Endabschnitt einer fluidtechnischen Komponente in Gestalt eines fluidbetätigten Arbeitszylinders 1, der mit einer Anschlussvorrichtung 2 erfindungsgemäßer Bauart bestückt ist, die im Einzelnen auch nochmals aus Fig. 3 bis 7 hervorgeht. Die Anschlussvorrichtung 2 ermöglicht es, den Arbeitszylinder 1 mit einer Fluidleitung 3 zu verbinden, um ein für den Betrieb des Arbeitszylinders 1 erforderliches Druckmedium, insbesondere Druckluft, zuzuführen und/oder abzuführen.

Der Arbeitszylinder 1 verfügt über ein Gehäuses 4, in dem ein herausragenden Kolbenstange 5 verbunden ist. Der Kolben trennt im Gehäuse 4 zwei Arbeitskammern voneinander ab, die jeweils mit einem Fluidkanal verbunden sind, der über einen Kupplungsabschnitt 6 zur Außenfläche des Gehäuses 4 ausmündet. In diesem Kupplungsabschnitt 6 ist die Anschlussvorrichtung 2 über ein Befestigungsteil 7 lösbar fixiert. Für den Anschluss der Fluidleitung 3 besitzt die Anschlussvorrichtung 2 eine Anschlussöffnung 8, der geeignete Haltemittel 12 zugeordnet sind, die unter Abdichtung ein lösbares Fixieren der Fluidleitung 3 gestatten. Die Haltemittel 12 sind insbesondere so ausgebildet, dass sie eine Steckkupplung definieren, die einen Steckanschluss einer Fluidleitung 3 ermöglicht.

In der Zeichnung ist der Arbeitszylinder 1 mit lediglich einer Anschlussvorrichtung 2 ausgestattet. Es versteht sich jedoch, dass ohne weiteres beide Kupplungsabschnitte 6 mit einer Anschlussvorrichtung 2 bestückt sein können, wobei es sich um gleiche oder unterschiedlich ausgestattete Typen von Anschlussvorrichtungen handeln kann.

Die Anschlussvorrichtung 2 eignet sich zur Bestückung beliebiger fluidtechnischer Komponenten. Exemplarisch seien an dieser Stelle neben dem schon erwähnten Arbeitszylinder andere fluidbetätigte Antriebe, Ventile und zur Druckluftaufbereitung dienende Wartungsgeräte erwähnt.

Die Anschlussvorrichtung 2 dient nicht nur zum Herstellen der Fluidverbindung und dem Führen des Fluides, sondern ist durch die Ausstattung mit mindestens einer Funktionseinheit 13 in der Lage, aktiv mit dem strömenden Fluid zusammenzuwirken, sei es, um eine Zustandsänderung dieses Fluides hervorzurufen und/oder um den Zustand oder eine Zustandsänderung des strömenden Fluides zu erfassen. In diesem Zusammenhang ist bei dem Ausführungsbeispiel der Fig. 1 bis 7 wenigstens eine Funktionseinheit 13 als Drosseleinrichtung 13a ausgeführt, mit der sich eine Drosselung des die Anschlussvorrichtung 2 durchströmenden Druckmediums herbeiführen lässt. Um die Drosselungsintensität nach Bedarf zu variieren, verfügt die Drosseleinrichtung 13a über eine Drosselschraube 14, die beim Verdrehen eine Linearbewegung in Richtung ihrer als Schraubenachse 15 bezeichneten Längsachse ausführt und dadurch - je nach Verstellrichtung - den Querschnitt eines Drosselspaltes 16 vergrößert oder verringert.

Die Längsachse des schon erwähnten Befestigungsteils 7 sei als Befestigungsachse 17 bezeichnet. Die mindestens eine Anschlussöffnung 8 befindet sich, wie auch die mindestens eine Funktionseinheit 13, an einem Funktionsteil 18, das mit dem Befestigungsteil 7 zu einer Baugruppe zusammengefasst ist, wobei es mit einer Ausrichtung von dem Befestigungsteil 7 wegragt, bei der seine als Hauptachse 22 bezeichnete Längsachse rechtwinkelig zur Befestigungsachse 17 des Befestigungsteils 7 verläuft. Die Bezeichnung "Funktionsteil" wurde gewählt, weil diese Komponente, wie erwähnt, mindestens ein mit dem in ihr strömenden Fluid zusammenwirkendes Funktionsteil 18 aufweist.

Im an dem Arbeitszylinder 1 installierten Zustand der Antriebsvorrichtung 2 greift das Befestigungsteil 7 in den Kupplungsabschnitt 6 des im Gehäuse 2 verlaufenden Fluidkanals ein und ist darin fixiert. Die Befestigungsachse 17 verläuft dabei in Achsrichtung des Kupplungsabschnittes 6 und zweckmäßigerweise zugleich rechtwinkelig zu der Außenfläche 23 des Gehäuses 4, an der sich die Mündung des Kupplungsabschnittes 6 befindet. Die Hauptachse 22 verläuft dabei mit Abstand parallel zu der Außenfläche 23.

Das Befestigungsteil 7 könnte prinzipiell ein im Rahmen einer Steckbefestigung im Kupplungsabschnitt 6 fixierbares Teil sein. Insbesondere in diesem Fall wäre es möglich, das Befestigungsteil 7 einstückig mit dem Funktionsteil 18 auszubilden. Vorgezogen wird allerdings die in der Zeichnung illustrierte Bauform, bei der das Befestigungsteil 7 eine Befestigungsschraube ist, die mit ihrem Schaft 25 eine kanalartige Durchbrechung 24 des Funktionsteils 18 durchsetzt und mit dem an der Unterseite des Funktionsteils 18 herausragenden Gewindeabschnitt 26 des Schaftes 25 in ein komplementäres Innengewinde des Kupplungsabschnittes 6 eingeschraubt ist. Ein dabei an der Oberseite des Funktionsteils 18 liegender Schraubenkopf 27 beaufschlagt das Funktionsteil 18 in der Richtung der Befestigungsachse 17 und fixiert es am Gehäuse 4.

Beim Ausführungsbeispiel ist das Funktionsteil 18 bei fest angezogenem Befestigungsteil 7 zwischen dem Schraubenkopf 27 und der Außenfläche 23 des Gehäuses 4 fest eingespannt. Solange das Befestigungsteil 7 jedoch noch nicht endgültig festgezogen ist, kann das Funktionsteil 18 gemäß Doppelpfeil 28 um die Befestigungsachse 17 verschwenkt werden, bis eine für den Anschluss der Fluidleitung 3 besonders geeignete winkelmäßige Ausrichtung gefunden ist. Erst anschließend wird das Befestigungsteil 7 mit dem vorgesehenen maximalen Drehmoment festgezogen.

Es wäre allerdings auch eine Ausführungsform möglich, bei der die Komponenten so aufeinander abgestimmt sind, dass sich das Funktionsteil 18 auch bei fest angezogenem Befestigungsteil 7 winkelmäßig positionieren lässt.

Das Befestigungsteil 7 dient nicht nur der Befestigung der Anschlussvorrichtung 2, sondern gleichzeitig auch der Führung des in den bzw. aus dem Arbeitszylinder 1 strömenden Fluides.

Der im montierten Zustand innerhalb der kanalartigen Durchbrechung 24 liegende, einerseits vom Schraubenkopf 27 und andererseits vom Gewindeabschnitt 26 flankierte Längenabschnitt des Schaftes 25 verfügt über eine konzentrische Einschnürung 28. Sie bildet mit der Wandung der kanalartigen Durchbrechung 24 einen Ringraum 32, der mit einem das Funktionsteil 18 durchsetzenden Kanalsystem 33 kommuniziert, mit dem auch die Anschlussöffnung 8 verbunden ist. Das Kanalsystem 33 mündet an der Wandung der Durchbrechung 24 in den Ringraum 32 ein.

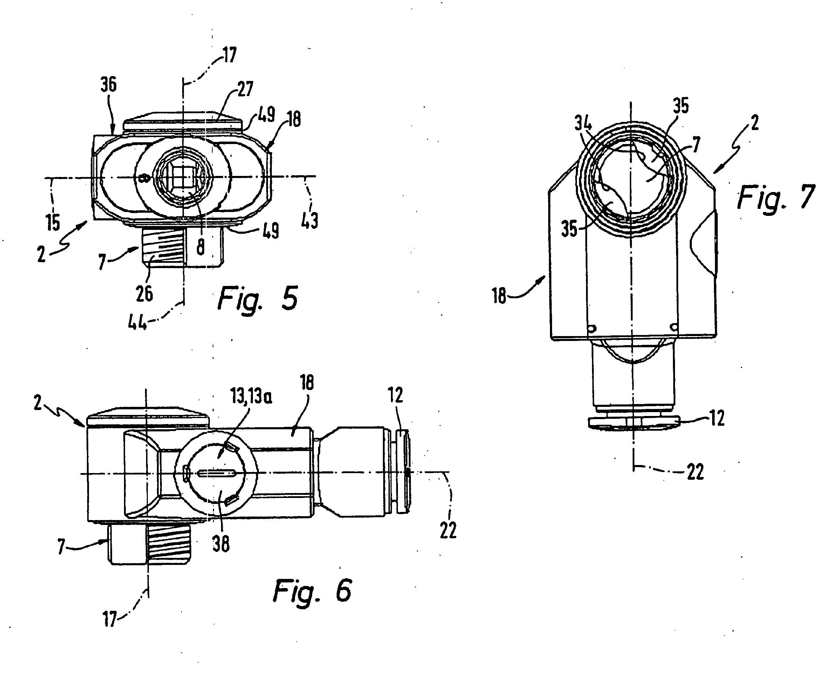

Der sich an der dem Schraubenkopf 27 entgegengesetzten Seite an die Einschnürung 28 anschließende Längenabschnitt des Schaftes 25, der wenigstens teilweise und vorzugsweise über seine gesamte Länge als Gewindeabschnitt 26 ausgebildet ist, ist am Außenumfang mit zwei einander diametral entgegengesetzt platzierten Strömungsvertiefungen 34 ausgebildet, die einen rinnenartigen Charakter haben und die jeweils einenends zu der Einschnürung 28 und andernends zu der dem Schraubenkopf 27 entgegengesetzten Stirnseite des Schaftes 25 ausmünden. Wie insbesondere die Fig. 7 zeigt, kann sich die offene Längsseite der Strömungsvertiefungen 34 ohne weiteres über eine relativ große Bogenlänge des grundsätzlich kreiszylindrischen Gewindeabschnittes 26 erstrecken, wobei vorliegend eine aus einem Bogenwinkel von etwa 90° resultierende Vertiefungsbreite gegeben ist. Die in Umfangsrichtung zwischen den beiden Strömungsvertiefungen 34 verbleibenden Abschnitte des Gewindeschaftes 26 reichen aus, um durch Einschrauben in den Kupplungsschaft 6 die erforderliche Festigkeit zu gewährleisten.

Im in den Kupplungsabschnitt 6 eingeschraubten Zustand des Befestigungsteils 7 begrenzen die Strömungsvertiefungen 34 mit der sie begrenzenden Umfangsfläche des Kupplungsabschnittes 6 jeweils einen Strömungskanal 35, der sich bis in den Ringraum 32 fortsetzt, sodass das Druckmedium in der Lage ist, umfangsseitig am Schaft 25 vorbei zwischen dem Kanalsystem 33 der Funktionseinheit 13 und dem zugeordneten Fluidkanal des Arbeitszylinders 1 überzuströmen.

Prinzipiell ließe sich die Strömungsverbindung auch mit nur einer Strömungsvertiefung 34 realisieren. Mit der Mehrfachanordnung lässt sich allerdings vorteilhaft ein relativ großer Gesamtströmungsquerschnitt verwirklichen, was eine hohe Durchflussrate gewährleistet.

Der Schraubenkopf 27 baut sehr flach, sodass er nur geringfügig über die von der Außenfläche 23 wegweisende Oberseite 36 der Funktionseinheit 13 vorsteht. Denkbar wäre auch eine Bauform, bei der der Schraubenkopf 27 ganz oder teilweise axial versenkt in der Funktionseinheit 13 aufgenommen ist. All dies gewährleistet bei installierter Anschlussvorrichtung 2 eine sehr geringe Bauhöhe, sodass die Anschlussvorrichtung 2 in Richtung der Befestigungsachse 17 nur wenig aufträgt und die Gesamtanordnung aus Arbeitszylinder 1 und Anschlussvorrichtung 2 in der Richtung der Befestigungsachse 17 über sehr kompakte Abmessungen verfügt.

Einen wesentlichen Beitrag für die geringe Bauhöhe der Anschlussvorrichtung 2 liefert auch die Ausrichtung der Funktionseinheiten 13 dergestalt, dass ihre Längsachsen 37 rechtwinkelig zu der Befestigungsachse 17 verlaufen und bei installierter Anschlussvorrichtung 2 praktisch parallel zu der Außenfläche 23 ausgerichtet sind.

Bei der Drosseleinrichtung 13a hat dies eine Ausrichtung der Drosselschraube 14 zur Folge, bei der die Schraubenachse 15 rechtwinkelig zur Befestigungsachse 17 des Befestigungsteils 7 verläuft. Dabei ist es zweckmäßig, die Drosseleinrichtung 13a auf derjenigen Seite der Befestigungsachse 17 im Funktionsteil 18 unterzubringen, wo sich auch die Anschlussöffnung 8 befindet. Zweckmäßig ist dabei eine Anordnung, bei der sich die Drosseleinrichtung 13a zwischen dem Befestigungsteil 7 und der mindestens einen Anschlussöffnung 8 befindet. Letztere ist zweckmäßigerweise rechtwinkelig zu der Befestigungsachse 17 orientiert, wobei sich die beim Ausführungsbeispiel vorgesehene Gleichrichtung mit der Hauptachse 22 als besonders vorteilhaft erwiesen hat, weil sich hier eine besonders gute Zugänglichkeit realisieren lässt. Die Anschlussöffnung 8 mündet zweckmäßigerweise an der der Durchbrechung 24 entgegengesetzten Stirnseite des Funktionsteils 18 aus.

Prinzipiell wäre es möglich, die Drosseleinrichtung 13a so zu platzieren, dass die Schraubenachse 15 mit der Hauptachse 22 zusammenfällt oder parallel zu dieser verläuft. Vorgezogen wird jedoch die aus der Zeichnung ersichtliche Bauform, bei der die Schraubenachse 15 quer und vorzugsweise rechtwinkelig zu der Hauptachse 22 verläuft und dabei gleichzeitig mit Abstand zu der Befestigungsachse 17 angeordnet ist. Bei einer solchen Anordnung liegt die für Einstellmaßnahmen zugängliche Betätigungspartie 38 an einer der schmalen Seitenflächen 42 des Funktionsteils 18, sodass sie bei der aus der Zeichnung ersichtlichen vorteilhaften Längsausrichtung des Funktionsteils 18 bezüglich des Arbeitszylinders 1 von der Seite her für etwa erforderliche Einstellarbeiten sehr gut zugänglich ist.

Dies eröffnet unter anderem auch die Möglichkeit, mehrere Arbeitszylinder so Seite an Seite nebeneinanderliegend anzuordnen, dass die Anschlussvorrichtungen 2 zwischen benachbarten Arbeitszylindern liegen, wobei dann durch den vorhandenen Spalt die Zugänglichkeit für die Betätigungspartie 38 gegeben ist.

Die Betätigungspartie 38 ist insbesondere so ausgebildet, dass sich daran ein Schraubwerkzeug ansetzen lässt, beispielsweise ein Schraubendreher.

Um die niedrige Bauhöhe der Anschlussvorrichtung 2 zu begünstigen, besitzt das Funktionsteil 18 eine flache Gestalt mit einem beispielsweise aus Fig. 3 und 5 gut ersichtlichen länglichen Querschnitt, verbunden mit einer Ausrichtung, bei der die Querschnitts-Längsachse 43 rechtwinkelig zur Befestigungsachse 17 ausgerichtet ist. Die Abmessungen in Richtung der zur Befestigungsachse 17 parallelen Querschnitts-Hochachse 44 sind demgegenüber wesentlich geringer und beschränken sich insbesondere auf das Maß, das erforderlich ist, um die Querschnittsabmessungen der Funktionseinheiten 13 darin unterzubringen.

Durch den länglichen Querschnitt des Funktionsteils 18 hat man die Möglichkeit, Funktionseinheiten 13 quer zu der Hauptachse 22 auszurichten und sie dennoch zu wenigstens dem größten Teil ihrer Baulänge in das Funktionsteil 18 zu integrieren.

Wie schon erwähnt, kann das Funktionsteil 18 über eine praktisch beliebige Anzahl von Funktionseinheiten 13 verfügen. Bei dem in Fig. 1 bis 7 gezeigten Ausführungsbeispiel ist zusätzlich zu der Drosseleinrichtung 13a noch ein Rückschlagventil 13b vorgesehen. Dieses ist innerhalb des Kanalsystems 33 in die Verbindung zwischen den Ringraum 32 und die Anschlussöffnung 8 eingeschaltet, und zwar in Parallelschaltung zur Drosseleinrichtung 13a. Über die Anschlussöffnung 8 eingespeistes Druckmedium kann somit durch das öffnende Rückschlagventil 13b hindurch ungedrosselt zum Arbeitszylinder 1 strömen, während bei entgegengesetzter Strömungsrichtung die Sperrfunktion des Rückschlagventils 13b einsetzt, sodass das Druckmedium dann nur über die Drosseleinrichtung 13a ausströmen kann. Die Sperrrichtung des Rückschlagventils 13b kann allerdings auch vertauscht werden.

Ein besonders vorteilhafter Aufbau des Funktionsteils 18 ergibt sich, wenn dieses - wie insbesondere in Fig. 3 und 4 zum Ausdruck kommt - über ein mehrteiliges Gehäuse 45 verfügt, das einen dem Befestigungsteil 7 zugeordneten Grundkörper 46 und einen an der dem Befestigungsteil 7 entgegengesetzten Stirnseite in den Grundkörper 46 eingesetzten Deckel 47 aufweist. Der Deckel 47 fungiert als Träger für die Haltemittel 12 und definiert die Anschlussöffnung 8. Im Übrigen ist der größte Teil des Kanalsystems 33 in dem Grundkörper 46 ausgebildet.

Der Deckel 47 ist in eine komplementär gestaltete Aufnahme 52 des Grundkörpers 46 eingesteckt, wobei er am Außenumfang eine umlaufende Dichtung 48 aufweist, die an der Innenfläche der Aufnahme 52 dichtend zur Anlage gelangt. Gleichzeitig den Grundkörper 46 und den Deckel 47 durchsetzende Querstifte 53 fixieren den Deckel 47 im Grundkörper 46. Zweckmäßigerweise fungiert der Deckel 47 als Träger für wenigstens eine Komponente einer Funktionseinheit 13, die dadurch bei der Montage des Deckels 47 automatisch ebenfalls installiert wird. Bei dem bevorzugten Ausführungsbeispiel verfügt der Deckel 47 an der dem Grundkörper 46 axial zugewandten Innenseite über einen Fortsatz 54, der eine ringförmige Rückschlaglippe 54 trägt, die zu dem Rückschlagventil 13b gehört. Wird der Deckel 47 in den Grundkörper 46 eingesteckt, taucht die Rückschlaglippe 54 in einen Kanal 55 des Kanalsystems 33 ein, mit dessen Wandung sie zur Bildung des Rückschlagventils 13b kooperiert. Ohne weiteres könnte der Deckel 47 an der Innenseite auch andere oder weitere Komponenten von Funktionseinheiten 13 aufweisen, die dann bei montiertem Deckel 47 vom Grundkörper 46 umschlossen werden.

Bei der Anschlussvorrichtung 2 sitzen sämtliche Funktionseinheiten 13 in oder an dem Funktionsteil 18. Das Befestigungsteil 7 kommt dadurch ohne integrierte Funktionseinheit aus und kann sich hinsichtlich seiner Funktionen auf die Befestigung und die Fluidführung beschränken. Dies ermöglicht eine sehr einfache Herstellung und die Einhaltung kleiner Abmessungen.

Um im Bereich des Befestigungsteils 7 eine fluiddichte Verbindung zu erhalten, wird zweckmäßigerweise zwischen dem Gehäuse 45 und sowohl dem Schraubenkopf 27 als auch dem Gehäuse 4 des Arbeitszylinders 1 je ein vom Schaft 25 des Befestigungsteils 7 durchsetzter Dichtungsring 49 platziert. Der Schaft 25 kann im Bereich des Gewindeabschnittes 26 eine Ringnut 50 aufweisen, um dort einen Dichtungsring unverlierbar fixieren zu können.

## Patentansprüche

1. Anschlussvorrichtung zum Anschließen mindestens einer Fluidleitung an eine fluidtechnische Komponente, beispielsweise einen fluidbetätigten Arbeitszylinder, mit einem sich in Richtung einer Befestigungsachse (17) erstreckenden, zur Fixierung an der fluidtechnischen Komponente und gleichzeitig zur Fluidführung vorgesehenen Befestigungsteil (7) und mit einem in Richtung einer zu der Befestigungsachse (17) rechtwinkeligen Hauptachse (22) von dem Befestigungsteil (7) wegragenden Funktionsteil (18), an dem mindestens eine zum Anschließen einer Fluidleitung geeignete Anschlussöffnung (8) vorgesehen ist, und das mit mindestens einer mit dem im Funktionsteil (18) strömenden Fluid zusammenwirkenden Funktionseinheit (13) ausgestattet ist, bei der es sich um eine Drosseleinrichtung (13a) mit einer einstellbaren Drosselschraube (14) handelt, wobei die Drosselschraube (14) so ausgerichtet ist, dass ihre Schraubenachse (15) rechtwinkelig zur Befestigungsachse (17) des Befestigungsteils (7) verläuft, **dadurch gekennzeichnet, dass** die Schraubenachse (15) mit Abstand zur Befestigungsachse (17) quer zur Hauptachse (22) des Funktionsteils (18) verläuft.

2. Anschlussvorrichtung nach Anspruch 1, **dadurch gekennzeichnet, dass** die Schraubenachse rechtwinkelig zur Hauptachse (22) des Funktionsteils (18) verläuft.

3. Anschlussvorrichtung nach Anspruch 1 oder 2, **dadurch gekennzeichnet, dass** die mindestens eine Anschlussöffnung (8) rechtwinkelig zu der Befestigungsachse (17) orientiert ist.

4. Anschlussvorrichtung nach einem der Ansprüche 1 bis 3, **dadurch gekennzeichnet, dass** die mindestens eine Anschlussöffnung (8) in der Richtung der Hauptachse (22) orientiert ist.

5. Anschlussvorrichtung nach einem der Ansprüche 1 bis 4,
**dadurch gekennzeichnet, dass** das Befestigungsteil (7) als das Funktionsteil (18) durchsetzende Befestigungsschraube ausgebildet ist.

6. Anschlussvorrichtung nach Anspruch 5, **dadurch gekennzeichnet, dass** die Befestigungsschraube zur Fluidführung an ihrem Schaft (25) umfangsseitig mindestens eine längsverlaufende Strömungsvertiefung (34) aufweist.

7. Anschlussvorrichtung nach Anspruch 6, **dadurch gekennzeichnet, dass** an dem Schaft (25) der Befestigungsschraube zwei einander diametral gegenüberliegend platzierte Strömungsvertiefungen (34) vorgesehen sind.

8. Anschlussvorrichtung nach Anspruch 6 oder 7, **dadurch gekennzeichnet, dass** der Schaft (25) der Befestigungsschraube zwischen dem Schraubenkopf (27) und dem Gewindeabschnitt (26) eine konzentrische Einschnürung (28) aufweist.

9. Anschlussvorrichtung nach einem der Ansprüche 5 bis 8, **dadurch gekennzeichnet, dass** das Funktionsteil (18), wenigstens bei noch nicht festgezogener Befestigungsschraube, relativ zur Befestigungsschraube um die Befestigungsachse (17) verschwenkbar ist.

10. Anschlussvorrichtung nach einem der Ansprüche 1 bis 9, **dadurch gekennzeichnet, dass** das Funktionsteil (18) zusätzlich zu der Drosseleinrichtung (13a) mit mindestens einer weiteren Funktionseinheit (13, 13b) ausgestattet ist.

11. Anschlussvorrichtung nach Anspruch 10, **dadurch gekennzeichnet, dass** als weitere Funktionseinheit (13) in dem Funktionsteil (18) mindestens ein Rückschlagventil (13b) vorgesehen ist.

12. Anschlussvorrichtung nach einem der Ansprüche 1 bis 11, **dadurch gekennzeichnet, dass** das Funktionsteil (18) Flachgestalt aufweist und quer zu seiner Hauptachse (22) über einen länglichen Querschnitt verfügt, wobei die Querschnitts-Längsachse (43) rechtwinkelig zur Befestigungsachse (17) ausgerichtet ist.

13. Anschlussvorrichtung nach einem der Ansprüche 1 bis 12, **dadurch gekennzeichnet, dass** das Funktionsteil (18) ein Gehäuse (45) aufweist, mit einem dem Befestigungsteil (7) zugeordneten Grundkörper (46) und einem stirnseitig in den Grundkörper (46) eingesetzten Deckel (47), wobei der Deckel (47) mindestens eine Anschlussöffnung (8) aufweist.

14. Anschlussvorrichtung nach Anspruch 13, **dadurch gekennzeichnet, dass** der Deckel (47) an seiner Innenseite, in dem vom Grundkörper (46) umschlossenen Bereich, mindestens eine Komponente (54) einer Funktionseinheit (13) trägt.

15. Anschlussvorrichtung nach einem der Ansprüche 1 bis 14, **dadurch gekennzeichnet, dass** das Befestigungsteil (7) das Funktionsteil (18) an dessen Oberseite (36) nicht oder nur geringfügig überragt.

16. Anschlussvorrichtung nach einem der Ansprüche 1 bis 15, **dadurch gekennzeichnet, dass** bei einer Ausgestaltung des Befestigungsteils (7) als Befestigungsschraube lediglich der Schraubenkopf (27) über die Oberseite (36) des Funktionsteils (18) vorsteht.

## Claims

1. Connecting device for connecting at least one fluid line to a fluid power component, such as a fluid-operated cylinder, with a mounting part (7) extending in the direction of a mounting axis (17), which is provided for location on the fluid power component and at the same time for fluid guidance, and with a functional part (18) projecting away from the mounting part (7) in the direction of a main axis (22) extending at right angles to the mounting axis (17), on which is provided at least one connecting port (8) suitable for connecting a fluid line and which is fitted with at least one functional unit (13) acting together with the fluid flowing in the functional part (18), this being a restrictor device (13a) with an adjustable restrictor screw (14), the restrictor screw (14) being oriented such that its axis (15) extends at right angles to the mounting axis (17) of the mounting part (7), **characterised in that** the axis (15) of the screw extends at a distance from the mounting axis (17) at right angles to the main axis (22) of the functional part (18).

2. Connecting device according to claim 1, **characterised in that** the axis of the screw extends at right angles to the main axis (22) of the functional part (18).

3. Connecting device according to claim 1 or 2, **characterised in that** the at least one connecting port (8) is oriented at right angles to the mounting axis (17).

4. Connecting device according to any of claims 1 to 3, **characterised in that** the at least one connecting port (8) is oriented in the direction of the main axis (22).

5. Connecting device according to any of claims 1 to 4, **characterised in that** the mounting part (7) is designed as a mounting bolt passing through the functional part (18).

6. Connecting device according to claim 5, **characterised in that** the mounting bolt features at least one longitudinally oriented flow recess (34) on the circumference of its shank (25) for fluid guidance.

7. Connecting device according to claim 6, **characterised in that** two flow recesses (34) located diametrically opposite one another are provided on the shank (25) of the mounting bolt.

8. Connecting device according to claim 6 or 7, **characterised in that** the shank (25) of the mounting bolt has a concentric waist (28) between the bolt head (27) and the threaded section (26).

9. Connecting device according to any of claims 5 to 8, **characterised in that** the functional part (18) is pivotable about the mounting axis (17) relative to the mounting bolt, at least while the mounting bolt has not yet been tightened.

10. Connecting device according to any of claims 1 to 9, **characterised in that** the functional part (18) is provided with at least one further functional unit (13, 13b) in addition to the restrictor device (13a).

11. Connecting device according to claim 10, **characterised in that** the further functional unit (13) provided in the functional part (18) is represented by at least one check valve (13b).

12. Connecting device according to any of claims 1 to 11, **characterised in that** the functional part (18) has a flat shape and an oblong cross-section at right angles to its main axis (22), the longitudinal axis (43) of the cross-section being oriented at right angles to the mounting axis 17.

13. Connecting device according to any of claims 1 to 12, **characterised in that** the functional part (18) has a housing (45), with a base body (46) assigned to the mounting part (7) and a cover (47) fitted to the end face of the base body (46), the cover (47) featuring at least one connecting port (8).

14. Connecting device according to claim 13, **characterised in that** the cover (17) supports at least one component (54) of a functional unit (13) on its inside in the area enclosed by the base body (46).

15. Connecting device according to any of claims 1 to 14, **characterised in that** the mounting part (7) projects from the top (36) of the functional part (18) either not at all or only minimally.

16. Connecting device according to any of claims 1 to 15, **characterised in that**, if the mounting part (7) is designed as a mounting bolt, only the bolt head (27) projects from the top (36) of the functional part (18).

## Revendications

1. Dispositif de raccordement pour raccorder au moins une conduite de fluide à un composant de technique des fluides, par exemple un vérin actionné par un fluide, avec une partie de fixation (7) s'étendant dans la direction d'un axe de fixation (17) et prévue pour une fixation sur le composant de technique des fluides et simultanément pour conduire le fluide, et avec une partie fonctionnelle (18) formant saillie depuis la partie de fixation (7) dans la direction d'un axe principal (22) perpendiculaire à l'axe de fixation (17), partie fonctionnelle sur laquelle est prévue au moins une ouverture de raccordement (8) convenant pour le raccordement d'une conduite de fluide, et qui est équipée d'au moins une unité fonctionnelle (13) coopérant avec le fluide s'écoulant dans la partie fonctionnelle (18), unité qui est un dispositif d'étranglement (13a) avec une vis d'étranglement réglable (14), la vis d'étranglement (14) étant orientée de telle manière que son axe de vis (15) s'étend perpendiculairement à l'axe de fixation (17) de la partie de fixation (7), **caractérisé en ce que** l'axe de vis (15) s'étend à distance de l'axe de fixation (17) transversalement à l'axe principal (22) de la partie fonctionnelle (18).

2. Dispositif de raccordement selon la revendication 1, **caractérisé en ce que** l'axe de vis s'étend perpendiculairement à l'axe principal (22) de la partie fonctionnelle (18).

3. Dispositif de raccordement selon la revendication 1 ou 2, **caractérisé en ce que** l'ouverture de raccordement au nombre d'au moins une (8) est orientée perpendiculairement à l'axe de fixation (17).

4. Dispositif de raccordement selon l'une des revendications 1 à 3, **caractérisé en ce que** l'ouverture de raccordement au nombre d'au moins une (8) est orientée dans la direction de l'axe principal (22).

5. Dispositif de raccordement selon l'une des revendications 1 à 4, **caractérisé en ce que** la partie de fixation (7) est conformée en vis de fixation traversant la partie fonctionnelle (18).

6. Dispositif de raccordement selon la revendication 5, **caractérisé en ce que**, pour la conduite du fluide, la vis de fixation présente de manière périphérique sur sa tige (25) au moins un renfoncement d'écoulement (34) d'extension longitudinale.

7. Dispositif de raccordement selon la revendication 6, **caractérisé en ce que** sur la tige (25) de la vis de fixation sont prévus deux renfoncements d'écoulement (34) placés en des positions diamétralement opposées.

8. Dispositif de raccordement selon la revendication 6 ou 7, **caractérisé en ce que** la tige (25) de la vis de fixation présente un resserrement concentrique (28) entre la tête de vis (27) et la section filetée (26).

9. Dispositif de raccordement selon l'une des revendications 5 à 8, **caractérisé en ce qu'**au moins quand la vis de fixation n'est pas encore serrée, la partie fonctionnelle (18) peut pivoter autour de l'axe de fixation (17) par rapport à la vis de fixation.

10. Dispositif de raccordement selon l'une des revendications 1 à 9, **caractérisé en ce que** la partie fonctionnelle (18) est équipée, en plus du dispositif d'étranglement (13a), d'au moins une autre unité fonctionnelle (13, 13b).

11. Dispositif de raccordement selon la revendication 10, **caractérisé en ce que**, comme autre unité fonctionnelle (13), au moins un clapet anti-retour (13b) est prévu dans la partie fonctionnelle (18).

12. Dispositif de raccordement selon l'une des revendications 1 à 11, **caractérisé en ce que** la partie fonctionnelle (18) présente une forme plate et possède, transversalement à son axe principal (22), une section transversale oblongue, l'axe longitudinal de la section (43) étant dirigé perpendiculairement à l'axe de fixation (17).

13. Dispositif de raccordement selon l'une des revendications 1 à 12, **caractérisé en ce que** la partie fonctionnelle (18) présente un boîtier (45) avec un corps de base (46) associé à la partie de fixation (7) et un couvercle (47) inséré côté frontal dans le corps de base (46), le couvercle (47) présentant au moins une ouverture de raccordement (8).

14. Dispositif de raccordement selon la revendication 13, **caractérisé en ce que** le couvercle (47) porte sur sa face intérieure, dans la zone enserrée par le corps de base (46), au moins un composant (54) d'une unité fonctionnelle (13).

15. Dispositif de raccordement selon l'une des revendications 1 à 14, **caractérisé en ce que** la partie de fixation (7) ne dépasse pas ou seulement peu de la partie fonctionnelle (18) au niveau de la face extérieure (36) de celle-ci.

16. Dispositif de raccordement selon l'une des revendications 1 à 15, **caractérisé en ce que**, si la partie de fixation (7) est conformée en vis de fixation, seule la tête de la vis (27) dépasse au-delà de la face extérieure (36) de la partie fonctionnelle (18).
